# EUROPÄISCHE PATENTANMELDUNG

(11) **EP 4 803 703 A1**
(43) Veröffentlichungstag der Anmeldung: **09.09.2026**
(21) Anmeldenummer: 26152533.1
(22) Anmeldetag: 19.01.2026
(51) Int. Cl.: E02F 3/36, B60P 1/16

(54) **ANHÄNGER ZUR ANKOPPLUNG AN EINEN MIT EINEM HYDRAULISCHEN SCHNELLWECHSLER AUSGESTATTETEN BAGGER**

(30) Priorität: 04.03.2025 DE 102025108087
(71) Anmelder: OilQuick Deutschland KG, 82297 Steindorf (DE)
(72) Erfinder: Schauer, Franz, 82297 Steindorf (DE)
(74) Vertreter: Charrier Rapp & Liebau

(57) **Zusammenfassung**

Die Erfindung betrifft einen Anhänger (2) zur Ankopplung an einen mit einem hydraulischen Schnellwechsler (10) ausgestatteten Bagger (1), wobei der Anhänger (2) ein Fahrgestell (17) mit Rädern (18) und mindestens ein an dem Fahrgestell (17) mittels eines Stellelements (20) verstellbar angeordnetes Anhängerteil (21) enthält. Erfindungsgemäß ist an dem Anhänger (2) ein zur Kopplung mit dem Schnellwechsler (10) ausgebildeter Adapter (22) mit mindestens einem bei der Ankopplung des Schnellwechslers (10) an den Adapter (22) zum Eingriff mit einem ersten Kupplungselement (42) am Schnellwechsler (10) ausgeführten zweiten Kupplungselement (49) zur Versorgung und Ansteuerung des Stellelements (20) vom Bagger (1) aus angeordnet.

## Beschreibung

Die Erfindung betrifft einen Anhänger zur Ankopplung an einen mit einem hydraulischen Schnellwechsler ausgestatteten Bagger. Die Erfindung betrifft außerdem eine Baugeräteanordnung mit einem Bagger und einem derartigen Anhänger.

Zum einfachen und schnellen Wechseln von Anbaugeräten sind moderne Bagger vielfach mit hydraulisch betätigbaren Schnellwechslern ausgestattet. Mit einem derartigen Schnellwechsler können z.B. Schwenklöffel, Greifer, Scheren, Verdichter, Magnete, Hydraulikhammer oder andere Anbaugeräte in wenigen Sekunden und mit hohem Sicherheitsstandard von einer Fahrerkabine aus z.B. an einem Ausleger eines Baggers an- bzw. abgekuppelt werden. Aus der DE 10 2018 115 949 A1 ist ein derartiger Schnellwechsler bekannt. Dieser enthält einen an einem Ausleger einer Baggers befestigbaren Träger, der an einer Seite erste Aufnahmen mit einer zwischen einer Lösestellung und einer Verriegelungsstellung bewegbaren Verriegelungseinrichtung zur Halterung eines an einem Anbaugerät vorgesehenen ersten Kopplungselements und an der anderen Seite zweite Aufnahmen zur Halterung eines vom ersten Kopplungselement beabstandeten zweiten Kopplungselements aufweist. Die Verriegelungseinrichtung umfasst als Verriegelungsbolzen ausgebildete Verriegelungselemente, die durch ein hydraulisch verschiebbares und auch als H-Zylinder bezeichnetes Betätigungselement zwischen einer eingefahrenen Lösestellung zum Lösen oder Ankoppeln eines Anbaugeräts und einer ausgefahrenen Verriegelungsstellung zur Halterung des Anbaugeräts verschiebbar sind. Um bei derartigen Schnellwechslern auch die Versorgung der Anbaugeräte mit hydraulischer oder elektrischer Energie und deren Ansteuerung zu gewährleisten, sind an dem hydraulisch verschiebbaren Betätigungselement des baggerseitigen Schnellwechslers auch hydraulische und ggf. auch elektrische Kupplungselemente zur Kupplung mit entsprechenden Gegenelementen am Anbaugerät vorgesehen. Die am Schnellwechsler angeordneten Kupplungselemente wirken mit den anbaugeräteseitigen Gegenelementen derart zusammen, dass bei einer Bewegung der Verriegelungselemente in deren Verriegelungsstellung auch gleichzeitig eine Kupplung zwischen den am Schnellwechsler angeordneten Kupplungselementen und den an den Anbaugeräten angeordneten Gegenelementen erfolgt. Dadurch können die an den Schnellwechsler angekoppelten Anbaugeräte mit z.B. hydraulischer und ggf. pneumatischer und/oder elektrischer Energie versorgt und vom Bagger aus angesteuert werden.

Beim Einsatz derartiger Bagger auf Baustellen werden in der Regel auch Anhänger für den Transport des Aushubs oder der Anbaugeräte benötigt. Üblicherweise werden diese Anhänger durch gesonderte Zugmaschinen bewegt. Um die Anhänger jedoch zumindest auf der Baustelle zu bewegen, können diese auch an einen Bagger angekoppelt und durch diesen manövriert werden. Da solche Anhänger vielfach aber auch hydraulisch, pneumatisch und/oder elektrisch betätigbare Teile, wir z.B. hydraulisch oder pneumatisch kippbare Ladeflächen, hydraulisch betätigbare Seitenwände oder elektrische Stell- oder Anzeigeelemente aufweisen, müssen am Bagger gesonderte Energieversorgungskupplungen und aufwändige Ansteuerungen vorgesehen werden.

Aufgabe der Erfindung ist es, einen Anhänger und eine Baugeräteanordnung mit einem Bagger und einem derartigen Anhänger zu schaffen, die auch ohne zusätzlichen Steuerungsaufwand eine automatische Betätigung und Steuerung von hydraulischen, pneumatischen und/oder elektrischen Stellelementen des Anhängers vom Bagger aus ermöglichen.

Diese Aufgabe wird durch einen Anhänger mit den Merkmalen des Anspruchs 1 und durch eine Baugeräteanordnung mit den Merkmalen des Anspruchs 10 gelöst. Vorteilhafte Ausgestaltungen der Erfindung sind in den Unteransprüchen angegeben.

Der erfindungsgemäße Anhänger ist zur Ankopplung an einen mit einem hydraulischen Schnellwechsler ausgestatteten Bagger konzipiert. Er enthält ein Fahrgestell mit Rädern und mindestens ein an dem Fahrgestell mittels eines Stellelements verstellbar angeordnetes Anhängerteil. An dem Anhänger ist ein zur Kopplung mit dem Schnellwechsler ausgebildeter Adapter mit mindestens einem bei der Ankopplung des Schnellwechslers an den Adapter zum Eingriff mit einem ersten Kupplungselement am Schnellwechsler ausgeführten zweiten Kupplungselement zur Versorgung und Ansteuerung des Stellelements vom Bagger aus angeordnet. Über die miteinander korrespondierenden Kupplungselemente am anhängerseitigen Adapter und dem baggerseitigen Schnellwechsler kann beim Ankoppeln des baggerseitigen Schnellwechslers an den anhängerseitigen Adapter eine z.B. hydraulische, pneumatische oder auch elektrische Verbindung zwischen dem Bagger und dem Anhänger zur Ansteuerung oder Betätigung eines hydraulisch oder elektrisch betätigten Anhängerteils hergestellt werden. Eine üblicherweise für das automatische Wechseln von Anbaugeräten eingesetzte Schnellwechseleinrichtung kann so ohne aufwändige Auf- und Umrüstarbeiten an einem Bagger auch zur Betätigung am Anhänger vorgesehener Stellelemente dienen. An dem Bagger müssen keine gesonderten Kupplungen oder Anschlusseinrichtungen mit der dafür benötigten Ansteuerung vorgesehen werden.

In einer möglichen Ausgestaltung kann das verstellbare Anhängerteil eine an dem Fahrgestell kippbar angeordnete Lademulde oder Ladefläche und das Stellelements ein zwischen dem Fahrgestell und der Lademulde oder Ladefläche angeordneter Stellzylinder sein. Der Anhänger kann z.B. aber auch klappbare Seitenwände oder andere verstellbare Teile aufweisen, die über entsprechende Stellelemente vom Bagger aus betätigt werden können.

Das mindestens eine am Adapter angeordnete Kupplungselement kann zweckmäßigerweise über eine Versorgungsleitung mit dem Stellelement verbunden sein. Bei einer hydraulischen Versorgungsleitung kann es sich um eine Schlauchverbindung oder eine feste Rohrverbindung handeln. Je nach Einsatzzweck kann das mindestens eine am Adapter angeordnete zweite Kupplungselement als hydraulischer oder elektrischer Schnellkupplungsstecker ausgebildet sein.

Zur Betätigung und Ansteuerung mehrerer Anhängerteile können an dem Adapter auch mehrere zum Eingriff mit ersten Kupplungselementen am Schnellwechsler ausgebildete zweite Kupplungselemente angeordnet sein. Hierbei kann es sich um hydraulische, pneumatische oder elektrische Kupplungselemente handeln.

Zur mechanischen Verbindung zwischen Schnellwechsler und Adapter enthält der Adapter zweckmäßigerweise ein zum Eingriff mit ersten Aufnahmen des Schnellwechslers ausgebildetes erstes bolzen- bzw. achsenförmiges Kopplungselement und ein zum Eingriff mit zweiten Aufnahmen des Schnellwechslers ausgebildetes zweites bolzen- bzw. achsenförmiges Kopplungselement.

In einer weiteren zweckmäßigen Ausführungsform kann das mindestens eine am Adapter angeordnete zweite Kupplungselement über einen Kupplungselementträger am zweiten Kopplungselement des Adapters gehalten sein.

Um Kollisionen zwischen dem baggerseitigen Schnellwechsler und dem anhängerseitigen Adapter beim Ankoppeln möglichst zu vermeiden, ist der Adapter vorzugsweise auf einer Anhängerdeichsel des Anhängers angeordnet. Der Adapter kann z.B. direkt oder über ein Dämpfungselement auf der Anhängerdeichsel befestigt sein. Der Adapter kann aber auch an einer anderen geeigneten Stelle des Anhängers angeordnet sein. So kann der Adapter z.B. auch an dem Fahrgestell angeordnet sein. Er kann auch an dem Aufbau des Anhängers z.B. an einer Konsole eingehängt und ggf. mit einem manuell oder hydraulisch betätigten Bolzen oder dgl. gesichert sein. Somit wäre der Adapter beim Betrieb nicht auf dem Anhänger fixiert und man wäre mit dem Bagger deutlich beweglicher.

Die Erfindung betrifft außerdem eine Baugeräteanordnung bestehend aus einem mit einem hydraulischen Schnellwechsler ausgestatteten Bagger und einem an den Bagger angekoppelten Anhänger, der wie vorstehend beschrieben ausgebildet ist.

Der Schnellwechsler kann über ein Dreh- und Schwenkaggregat an einem Baggerstiel des Baggers befestigt ist. Er kann aber auch direkt oder nur über ein Drehaggregat an dem Baggerstiel montiert sein.

Um den Anhänger an den Bagger anzukoppeln, kann zweckmäßigerweise an einem in der Höhe verstellbaren Frontschild des Baggers ein baggerseitiges Kupplungsteil für eine Anhängerkupplung des Anhängers angeordnet sein. Der Anhänger kann aber auch über den Schnellwechsler mit dem Bagger mechanisch gekoppelt werden. Dann ist am Bagger kein gesondertes Kupplungsteil erforderlich.

Weitere Besonderheiten und Vorzüge der Erfindung ergeben sich aus der folgenden Beschreibung eines bevorzugten Ausführungsbeispiels anhand der Zeichnung. Es zeigen:
- **Figur 1**: eine Baugeräteanordnung mit einem Bagger und einem an den Bagger angekoppelten Anhänger in einer schematischen Seitenansicht;
- **Figur 2**: eine vergrößerte und zum Teil geschnittene Darstellung einer Verbindung zwischen einem am Bagger angeordneten Schnellwechsler und einem am Anhänger angeordneten Adapter;
- **Figur 3**: einen mittels eines Dreh- und Schwenkaggregats an einem Baggerstiel angeordneten Schnellwechsler in einer Ansicht von Unten;
- **Figur 4**: einen Anhänger mit einem Adapter und
- **Figur 5**: eine vergrößerte Ansicht des am Anhänger angeordneten Adapters von Figur 4.

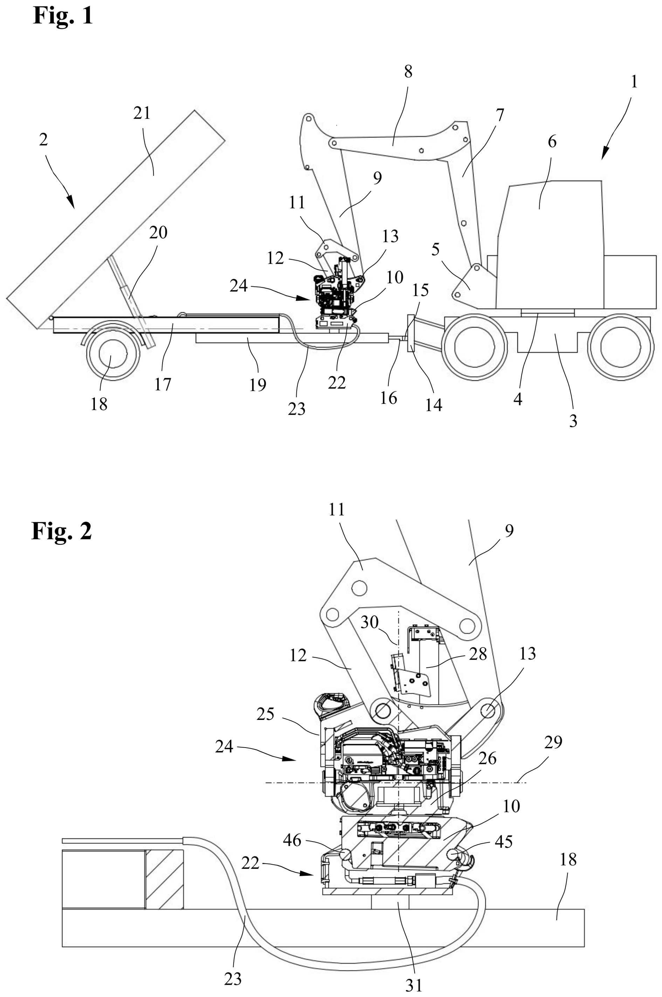

In Figur 1 ist eine Baugeräteanordnung mit einem Bagger 1 und einem an dem Bagger 1 angekoppelten Anhänger 2 gezeigt. Der in der gezeigten Ausführung als Radbagger ausgebildete Bagger 1 enthält in an sich bekannter Weise einen Unterwagen 3 und einen mittels eines Drehkranzes 4 auf dem Unterwagen 3 drehbar angeordneten Oberwagen 5 mit einer Fahrerkabine 6. An dem Oberwagen 5 ist ein hier als Verstellausleger ausgebildeter Ausleger mit einem am Oberwagen 5 schwenkbar angelenkten ersten Auslegerteil 7 und einem am ersten Auslegerteil 7 schwenkbar angeordneten zweiten Auslegerteil 8 angeordnet. An dem zweiten Auslegerteil 8 ist ein Baggerstiel 9 schwenkbar abgelenkt.

An dem Baggerstiel 10 ist ein für das automatische und schnelle Wechseln von Anbaugeräten konzipierter Schnellwechsler 10 über eine Schwinge 11 und eine Koppel 12 um einen horizontalen Bolzen 13 am unteren Ende des Baggerstiels 9 schwenkbar angeordnet. An dem Unterwagen 3 des Baggers 1 ist außerdem ein in der Höhe verstellbares Frontschild 14 mit einem baggerseitigen Kupplungsteil 15 zur Verbindung mit einer Anhängerkupplung 16 am Anhänger 2 angebracht. Der hier als Rückwärtskipper ausgebildete Anhänger 2 weist ein Fahrgestell 17 mit Rädern 18, eine Anhängerdeichsel 19 mit der Anhängerkupplung 16 und ein an dem Fahrgestell 17 mittels eines Stellelements 20 verstellbar angeordnetes Anhängerteil 21 auf. Bei der gezeigten Ausführung ist das verstellbare Anhängerteil 21 als nach hinten kippbare Lademulde ausgeführt. Das Stellelement 20 ist als hydraulisch betätigbarer Stellzylinder ausgebildet. In Figur 1 ist der an dem Baggerstiel 9 angeordnete Schnellwechsler 10 mit einem am Anhänger 2 angeordneten Adapter 22 gekoppelt. Der Adapter 22 ist über eine Versorgungsleitung 23 mit dem als Stellzylinder ausgebildeten Stellelement 20 zum Anheben und Absenken des als kippbare Lademulde ausgeführten Anhängerteils 21 verbunden.

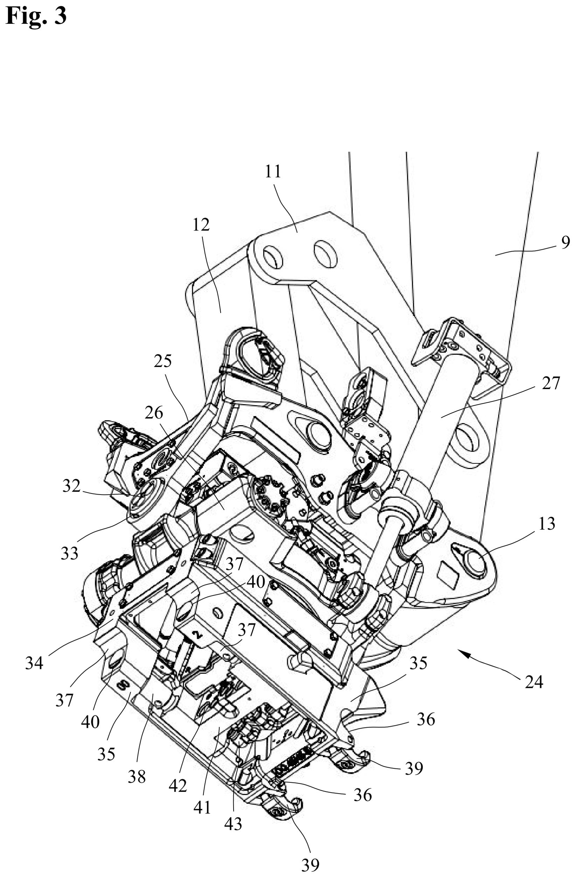

Wie besonders aus Figur 2 hervorgeht, ist bei dem gezeigten Ausführungsbeispiel der Schnellwechsler 10 über ein auch als Tiltrotator bezeichnetes Dreh- und Schwenkaggregat 24 an dem Baggerstiel 9 und der Koppel 12 angeordnet. Das in Figur 3 in einer Unteransicht dargestellte Dreh- und Schwenkaggregat 24 enthält einen an dem Baggerstiel 9 und der Koppel 12 montierten Träger 25, an dem ein Gehäuse 26 mittels eines hier durch zwei hydraulische Stellzylinder 27 und 28 gebildeten Schwenkantriebs um eine quer zur Längsachse des Baggerstiels angeordnete Schwenkachse 29 verschwenkbar angeordnet ist. In dem um die Schwenkachse 29 schwenkbaren Gehäuse 26 ist der zum automatischen Wechseln von Anbauwerkzeugen konzipierte Schnellwechsler 10 um eine zur Schwenkachse 29 orthogonale Drehachse 30 drehbar gelagert und kann durch einen Motor über ein innerhalb des Gehäuses 26 angeordnetes Getriebe relativ zum Gehäuse 26 um die Drehachse 30 um 360° motorisch gedreht werden. Über die mittels der Schwinge 11 an dem Baggerstiel 9 angelenkte Koppel 12 und einen nicht dargestellten Kippzylinder kann der Träger 25 des Dreh- und Schwenkaggregats 24 außerdem um den Bolzen 13 an dem unteren Ende des Baggerstiels 9 in an sich bekannter Weise gekippt werden.

Bei der in Figur 2 gezeigten Stellung ist der über das Dreh- und Schwenkaggregat 24 an dem Baggerstiel 9 und der Koppel 12 angeordnete Schnellwechsler 10 mit dem am Anhänger 2 angeordneten Adapter 22 gekoppelt. Der Adapter 22 kann entweder unmittelbar oder über ein in Figur 2 gezeigtes Dämpfungselement 31 an dem Anhänger 2 befestigt sein.

In Figur 3 ist erkennbar, dass das Gehäuse 26 an dem Träger 25 über seitlich vorstehende Lagerzapfen 32 innerhalb zweier voneinander beabstandeter Lageraugen 33 um die zur Drehachse 30 orthogonale Schwenkachse 29 schwenkbar angeordnet ist und über den durch die beiden Stellzylinder 27 und 28 gebildeten hydraulischen Schwenkantrieb relativ zum Träger 25 um ca. +/- 45° um die in Figur 2 gezeigte Schwenkachse 29 gekippt werden kann Dadurch kann der Schnellwechsler 10 nicht nur um 360° um die ebenfalls in Figur 2 gezeigte Drehachse 30 gedreht, sondern zusätzlich auch gegenüber dem Träger 25 um die zur Drehachse 30 orthogonale Schwenkachse 29 gekippt werden, wodurch die Bewegungsmöglichkeiten erweitert werden und dadurch der Einsatzbereich vergrößert wird.

Aus Figur 3 ist außerdem ersichtlich, dass der innerhalb des Gehäuses 26 drehbar gelagerte Schnellwechsler 10 ein als Schweiß- oder Gußteil ausgeführtes Wechslergehäuse 34 mit zwei voneinander beabstandeten und zueinander parallelen Seitenwangen 35 enthält. An der einen Seite des Wechslergehäuses 34 sind nach vorne offene erste Aufnahmen 36 zur Aufnahme und Halterung eines ersten bolzen- bzw. achsenförmigen Kopplungselements und an der anderen Seite nach unten offene zweite Aufnahmen 37 mit Verriegelungselementen 38 zur Aufnahme und Halterung eines zweiten bolzen- bzw. achsenförmigen Kopplungselements aufweist. An den nach vorne offenen ersten Aufnahmen 36 sind klappbare Fanghaken 39 als Fallsicherung gegen Herabfallen eines Anbauteils angeordnet.

Bei dem gezeigten Ausführungsbeispiel enthält der Schnellwechsler 10 an der einen Seite der beiden Seitenwangen 35 des Wechslergehäuses 34 zwei voneinander beabstandete erste Aufnahmen 36 für ein erstes bolzen- bzw. achsenförmiges Kopplungselement und auf der anderen Seite der beiden Seitenwangen 35 zwei voneinander beabstandete zweite Aufnahmen 37 für ein zweites bolzen- bzw. achsenförmiges Kopplungselement. Die nach vorne offenen ersten Aufnahmen 36 sind klauen- oder gabelförmig ausgeführt. Die nach unten offenen zweiten Aufnahmen 37 weisen eine gekrümmte untere Anlagefläche zur Anlage des zweiten bolzen- bzw. achsenförmiges Kopplungselements auf. Der Schnellwechsler 10 enthält in der gezeigten Ausführung auch zwei als Verriegelungsbolzen ausgebildete Verriegelungselemente 38, die gemäß Figur 3 in Führungsbohrungen 40 in den beiden Seitenwangen 35 des Wechslergehäuses 34 verschiebbar geführt und gemeinsam durch eine in der Unteransicht H-förmiges und auch als H-Zylinder bezeichnetes Betätigungselement 41 hydraulisch zwischen einer in Figur 3 gezeigten eingefahrenen Lösestellung zum Lösen oder Ankoppeln eines Anbaugeräts und einer ausgefahrenen Verriegelungsstellung verschiebbar. In der ausgefahrenen Verriegelungsstellung werden die nach unten offenen zweiten Aufnahmen 37 von den in den Führungsbohrungen 40 angeordneten Verriegelungselementen 38 an der Unterseite geschlossen, so dass das zweite bolzenförmige Kopplungselement von den Verriegelungselementen 38 untergriffen und gehalten wird.

Um mit Hilfe eines derartigen Schnellwechslers 10 z.B. eine Baggerschaufel oder ein anderes Anbaugerät anzukuppeln, wird der an dem Bagger 1 angeordnete Schnellwechsler 10 zunächst so bewegt, dass ein z.B. an einem Adapter oder direkt an dem Anbaugerät angeordnetes erstes bolzen- bzw. achsenförmiges Kopplungselement in die klauen- bzw. gabelförmigen ersten Aufnahmen 36 auf der einen Seite des Schnellwechslers 10 eingefahren wird. Dann wird der Schnellwechsler 10 mit noch zurückgezogenen Verriegelungselementen 38 um das erste bolzen- bzw. achsenförmige Kopplungselement so geschwenkt, dass ein zweites bolzen- bzw. achsenförmige Kopplungselement am Adapter oder Anbaugerät zur Anlage an den Anlageflächen der nach unten offenen zweiten Aufnahmen 37 auf der anderen Seite des Schnellwechslers 10 gelangt. Anschließend können die in den Führungsbohrungen 40 im Wechslergehäuse 34 des Schnellwechslers 10 verschiebbar angeordneten Verriegelungselemente 38 durch entsprechende Verschiebung des Betätigungselements 41 hydraulisch ausgefahren werden, so dass das zweite bolzen- bzw. achsenförmige Kopplungselement von den beiden Verriegelungselementen 38 an dem Schnellwechsler 10 untergriffen und das Anbaugerät somit an dem Schnellwechsler 1 gehalten wird.

Wie aus Figur 3 ersichtlich ist, sind an einem Mittelteil des auch als H-Zylinder bezeichneten und zur Verschiebung der Verriegelungselemente 38 dienenden Betätigungselements 41 des Schnellwechslers 10 hydraulische und ggf. auch elektrische erste Kupplungselemente 42 vorgesehen. Diese z.B. als hydraulische Schnellkupplungsmuffen oder als elektrische Buchsen ausgebildeten ersten Kupplungselemente 42 sind über geeignete Anschlüsse 43 mit entsprechenden Versorgungsleitungen verbunden und in an sich bekannter Weise dazu ausgelegt, um bei einer Verschiebung des Betätigungselements 41 in die Verriegelungsstellung mit entsprechenden zweiten Kupplungselementen an einem hydraulisch oder elektrisch betätigten Anbaugerät gekoppelt zu werden. Die zweiten Kupplungselemente können z.B. als Schnellkupplungsstecker zur Verbindung mit den z.B. als Schnellkupplungsmuffen oder Buchsen ausgeführten ersten Kupplungselementen 42 ausgeführt sein. Dadurch können die hydraulisch oder elektrisch betätigten Anbaugeräte vom Bagger 1 aus mit hydraulischer oder elektrischer Energie versorgt und gesteuert werden.

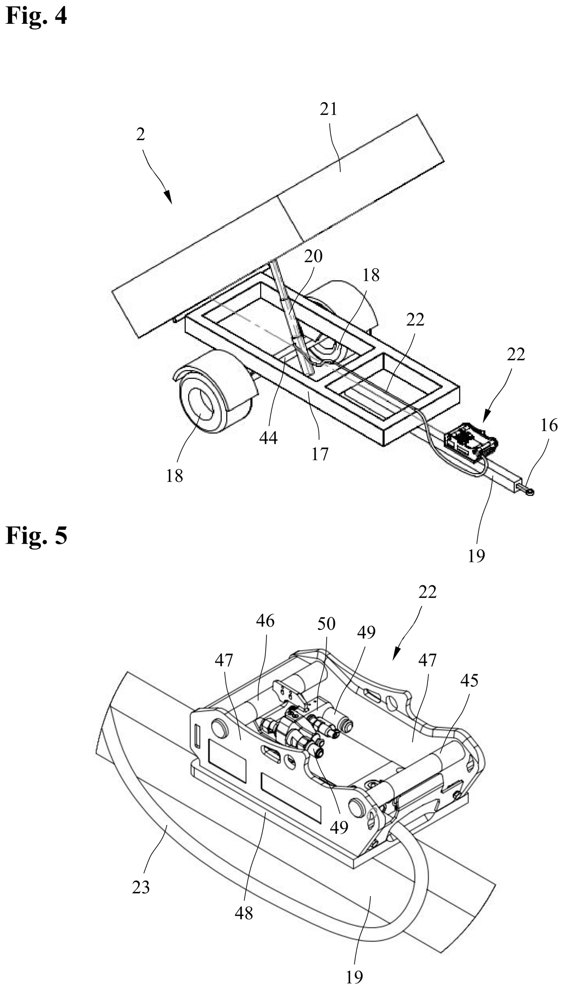

In Figur 4 ist ein Anhänger 2 mit einem zur Kupplung mit einem vorstehend beschriebenen Schnellwechsler 10 ausgebildeten Adapter 22 in einer schematischen Perspektivansicht gezeigt. Wie bereits erläutert, weist der hier als rückwärts kippbarer Muldenkipper ausgebildete Anhänger 2 ein rahmenförmiges Fahrgestell 17 mit einer Anhängerdeichsel 19 und der Anhängerkupplung 16 und einen mittels eines hier als Teleskopzylinder ausgeführten Stellelements 20 kippbaren und hier als Mulde ausgeführten Anhängerteil 21 auf. Der Anhänger 2 weist in dem gezeigten Ausführungsbeispiel nur eine Achse 44 und zwei Räder 18 auf. Der Anhänger 2 kann aber auch mehrachsig ausgeführt oder mit einem anderen Aufbau versehen sein. Außerdem kann der Anhänger 2 neben dem hier als Stellzylinder ausgeführten Stellelement 20 auch weitere hydraulisch oder elektrisch betätigte Stellelemente enthalten.

Der hier auf der Anhängerdeichsel 19 angeordnete und in Figur 5 vergrößert dargestellte Adapter 22 enthält ein zum Eingriff in die ersten Aufnahmen 36 des Schnellwechslers 10 ausgebildetes erstes bolzen- bzw. achsenförmiges Kopplungselement 45 und ein zum Eingriff in die zweiten Aufnahmen 36 des Schnellwechslers 10 ausgebildetes zweites bolzen- bzw. achsenförmiges Kopplungselement 46. Bei der gezeigten Ausführung sind die beiden zueinander parallelen und voneinander beabstandeten bolzen- bzw. achsenförmigen Kopplungselemente 45 und 46 mit ihren Enden in zwei zueinander parallelen und voneinander beabstandeten plattenförmigen Seitenteilen 47 angeordnet. Die beiden plattenförmigen Seitenteile 47 sind auf einer Grundplatte 48 nach oben vorstehend angeordnet. An dem Adapter 21 sind außerdem hier als Schnellkupplungsstecker ausgebildete zweite Kupplungselemente 49 zur Verbindung mit den am Schnellwechsler 10 angeordneten ersten Kupplungselementen 42 angebracht. Bei dem in Figur 5 gezeigten Ausführungsbeispiel sind die als Schnellkupplungsstecker ausgebildeten zweiten Kupplungselemente 49 in einem an dem zweiten Kopplungselement befestigten Kupplungselementträger 50 angeordnet. Bei der gezeigten Ausführung ist an eines der zweiten Kupplungselemente 49 des am Anhänger 2 befestigten Adapters 22 eine zu dem Stellelement 20 führende und als Verbindungsschlauch ausgeführte Versorgungsleitung 23 angeschlossen. Dadurch kann der kippbare Aufbau 21 des Anhängers 2 auch ohne gesonderte Steuereinrichtung vom Bagger 1 aus angehoben oder abgesenkt werden.

Während über das erste und zweite Kopplungselement 45 und 46 eine mechanische Verbindung zwischen dem baggerseitigen Schnellwechsler 10 und dem anhängerseitigen Adapter 21 erreicht wird, wird über das am Schnellwechsler 10 vorgesehene erste Kupplungselement 42 und das am Adapter 22 des Anhängers 2 angeordnete, über die Versorgungsleitung 23 mit dem Stellelement 20 verbundene zweite Kupplungselement 49 eine Ansteuerung des Stellelements 20 am Anhänger 2 ermöglicht. Gleichzeitig mit der Betätigung der Verriegelung am Schnellwechsler wird somit eine Hydraulikverbindung zwischen dem Schnellwechsler 10 und dem Anhänger 2 hergestellt. Über weitere hydraulische, pneumatische oder elektrische Kupplungselemente kann auch eine Ansteuerung von weiteren hydraulisch oder elektrisch betätigten Stellelementen am Anhänger 2 auch ohne aufwändige Zusatzsteuerungen auf einfach Weise vom Bagger 1 aus über den Schnellwechsler 10 erfolgen.

Der vorstehend beschriebene Anhänger 2 muss nicht zwangsläufig über die Anhängerkupplung 16 und ein entsprechendes baggerseitiges Kupplungsteil 15 mit dem Bagger 1 mechanisch gekoppelt sein. Die mechanische Verbindung zwischen Bagger 1 und Anhänger 2 kann auch über den baggerseitigen Schnellwechsler 10 und den anhängerseitigen Adapter 22 erfolgen.

### Bezugszeichenliste

- 1: Bagger
- 2: Anhänger
- 3: Unterwagen
- 4: Drehkranz
- 5: Oberwagen
- 6: Fahrerkabine
- 7: Erstes Auslegerteil
- 8: Zweites Auslegerteil
- 9: Baggerstiel
- 10: Schnellwechsler
- 11: Schwinge
- 12: Koppel
- 13: Bolzen
- 14: Frontschild
- 15: Baggerseitiges Kupplungsteil
- 16: Anhängerkupplung
- 17: Fahrgestell
- 18: Rad
- 19: Anhängerdeichsel
- 20: Stellelement
- 21: Anhängerteil
- 22: Adapter
- 23: Versorgungsleitung
- 24: Dreh- und Schwenkaggregat
- 25: Träger
- 26: Gehäuse
- 27: Stellzylinder
- 28: Stellzylinder
- 29: Schwenkachse
- 30: Drehachse
- 31: Dämpfungselement
- 32: Lagerzapfen
- 33: Lageraugen
- 34: Wechslergehäuse
- 35: Seitenwange
- 36: Erste Aufnahme
- 37: Zweite Aufnahme
- 38: Verriegelungselement
- 39: Fanghaken
- 40: Führungsbohrung
- 41: Betätigungselement (H-Zylinder)
- 42: Erstes Kupplungselement
- 43: Anschluss
- 44: Achse
- 45: Erstes Kopplungselement
- 46: Zweites Kopplungselement
- 47: Seitenteil
- 48: Grundplatte
- 49: Zweites Kupplungselement
- 50: Kupplungselementträger

## Patentansprüche

1. Anhänger (2) zur Ankopplung an einen mit einem hydraulischen Schnellwechsler (10) ausgestatteten Bagger (1), wobei der Anhänger (2) ein Fahrgestell (17) mit Rädern (18) und mindestens ein an dem Fahrgestell (17) mittels eines Stellelements (20) verstellbar angeordnetes Anhängerteil (21) enthält, **dadurch gekennzeichnet, dass** an dem Anhänger (2) ein zur Kopplung mit dem Schnellwechsler (10) ausgebildeter Adapter (22) mit mindestens einem bei der Ankopplung des Schnellwechslers (10) an den Adapter (22) zum Eingriff mit einem ersten Kupplungselement (42) am Schnellwechsler (10) ausgeführten zweiten Kupplungselement (49) zur Versorgung und Ansteuerung des Stellelements (20) vom Bagger (1) aus angeordnet ist.

2. Anhänger (2) nach Anspruch 1, **dadurch gekennzeichnet, dass** das verstellbare Anhängerteil (21) eine an dem Fahrgestell (17) kippbar angeordnete Lademulde oder Ladefläche und das Stellelement (20) ein zwischen dem Fahrgestell (17) und der Lademulde oder Ladefläche angeordneter Stellzylinder ist.

3. Anhänger (2) nach Anspruch 1 oder 2, **dadurch gekennzeichnet, dass** das mindestens eine am Adapter (22) angeordnete zweite Kupplungselement (49) über eine Versorgungsleitung (23) mit dem Stellelement (20) verbunden ist.

4. Anhänger (2) nach einem der Ansprüche 1 bis 3, **dadurch gekennzeichnet, dass** das mindestens eine am Adapter (22) angeordnete zweite Kupplungselement (49) als hydraulischer, pneumatischer oder elektrischer Schnellkupplungsstecker ausgebildet ist.

5. Anhänger (2) nach einem der Ansprüche 1 bis 4, **dadurch gekennzeichnet, dass** an dem Adapter (22) mehrere zum Eingriff mit ersten Kupplungselementen (42) am Schnellwechsler (10) ausgebildete zweite Kupplungselemente (49) angeordnet sind.

6. Anhänger (2) nach einem der Ansprüche 1 bis 5, **dadurch gekennzeichnet, dass** der Adapter (22) ein zum Eingriff mit ersten Aufnahmen (36) des Schnellwechslers (10) ausgebildetes erstes bolzen- bzw. achsenförmiges Kopplungselement (45) und ein zum Eingriff mit zweiten Aufnahmen (36) des Schnellwechslers (10) ausgebildetes zweites bolzen- bzw. achsenförmiges Kopplungselement (46) enthält.

7. Anhänger (2) nach Anspruch 6, **dadurch gekennzeichnet, dass** das mindestens eine am Adapter (22) angeordnete zweite Kupplungselement (49) über einen Kupplungselementträger (50) am zweiten Kopplungselement (46) des Adapters (22) gehalten ist.

8. Anhänger (2) nach einem der Ansprüche 1 bis 7, **dadurch gekennzeichnet, dass** der Adapter (22) auf einer Anhängerdeichsel (19) angeordnet ist.

9. Anhänger (2) nach Anspruch 8, **dadurch gekennzeichnet, dass** der Adapter (22) direkt oder über ein Dämpfungselement (31) auf der Anhängerdeichsel (19) befestigt ist.

10. Baugeräteanordnung umfassend einen mit einem hydraulischen Schnellwechsler (10) ausgestatteten Bagger (1) und einem an den Bagger (1) angekoppelten Anhänger (2), **dadurch gekennzeichnet, dass** der Anhänger (2) nach einem der Ansprüche 1 bis 9 ausgebildet ist.

11. Baugeräteanordnung nach Anspruch 10, **dadurch gekennzeichnet, dass** der Schnellwechsler (10) über ein Dreh- und Schwenkaggregat (24) an einem Baggerstiel (9) des Baggers (1) befestigt ist.

12. Baugeräteanordnung nach Anspruch 10 oder 11, **dadurch gekennzeichnet, dass** an einem in der Höhe verstellbaren Frontschild (14) des Baggers (1) ein baggerseitiges Kupplungsteil (15) für eine Anhängerkupplung (16) des Anhängers (2) angeordnet ist.
